# EUROPEAN PATENT APPLICATION

(11) **EP 3 849 275 A1**
(43) Date of publication of application: **14.07.2021**
(21) Application number: 18932658.0
(22) Date of filing: 05.09.2018
(51) Int. Cl.: H04W 92/18, H04W 72/04

(54) **USER DEVICE AND BASE STATION DEVICE**

(71) Applicant: NTT DoCoMo, Inc., Tokyo 100-6150 (JP)
(72) Inventor: OSAWA, Ryosuke, Tokyo 100-6150 (JP); TAKEDA, Kazuaki, Tokyo 100-6150 (JP); TAKEDA, Kazuki, Tokyo 100-6150 (JP)
(74) Representative: Hoffmann Eitle
(86) International application number: PCT/JP2018/032941
(87) International publication number: WO 2020/049669

(57) **Abstract**

A user equipment includes a receiving unit that receives first information indicating a first resource usable for D2D direct communication and second information indicating a second resource usable for the D2D direct communication, a control unit that determines a resource to be used for the D2D direct communication when the first resource and the second resource overlap, and a communication unit that executes the D2D direct communication using the determined resource.

## Description

### TECHNICAL FIELD

The present invention relates to a user equipment and a base station apparatus in a wireless communication system.

### BACKGROUND ART

In Long Term Evolution (LTE), successor systems of LTE (for example, LTE-Advanced (LTE-A), and New Radio (NR) (also called 5G)), device to device (D2D) technology in which user equipments perform communication directly with each other without going through a base station apparatus is under review (for example, Non-Patent Document 1) .

In D2D, it is possible to reduce traffic between a user equipment and a base station apparatus, and communication between user equipments can be performed even when a base station apparatus is unable to perform communication in the event of a disaster or the like. In 3rd Generation Partnership Project (3GPP), D2D is called "sidelink," but D2D which is a more general term is used in this specification. However, in the description of an embodiment to be described later, a sidelink is also used if necessary.

D2D communication is roughly classified into D2D discovery for discovering other equipments which are capable of performing communication and D2D communication (also referred to as "D2D direct communication") in which direct communication between user equipments is performed. Hereinafter, when D2D communication, D2D discovery, and the like are not particularly distinguished, they are referred to simply as D2D. A signal transmitted and received by D2D is referred to as a D2D signal. In NR, various use cases of services related to vehicle to everything (V2X) are under review (for example, Non-Patent Document 2).

### CITATION LIST

### NON-PATENT DOCUMENT

Non-Patent Document 1: 3GPP TS 36.211 V15.2.0 (2018-06)
Non-Patent Document 2: 3GPP TR 22.886 V15.1.0 (2017-03)

### SUMMARY OF THE INVENTION

### PROBLEM TO BE SOLVED BY THE INVENTION

In a case in which a user equipment performs D2D communication in different Radio Access Technologies (RATs), a scheduler that determines a resource to be used for the D2D communication may not cooperate between RATs.

The present invention was made in light of the foregoing, and it is an object of the present invention to determine a resource to be used by a user equipment in D2D direct communication between different Radio Access Technologies (RATs).

### MEANS FOR SOLVING PROBLEM

According to the technique of the disclosure, provided is a user equipment including a receiving unit that receives first information indicating a first resource usable for D2D direct communication and second information indicating a second resource usable for D2D direct communication, a control unit that determines a resource to be used for D2D direct communication when the first resource and the second resource overlap, and a communication unit that executes D2D direct communication using the determined resource.

### EFFECT OF THE INVENTION

According to the technique of the disclosure, it is possible to determine a resource to be used by a user equipment in D2D direct communication between different Radio Access Technologies (RATs).

### BRIEF DESCRIPTION OF DRAWINGS

Fig. 1 is a diagram for describing V2X;
Fig. 2A is a diagram illustrating an example (1) of resource allocation in an embodiment of the present invention;
Fig. 2B is a diagram illustrating an example (2) of resource allocation in an embodiment of the present invention;
Fig. 3A is a diagram illustrating an example (1) of resource exclusion in an embodiment of the present invention;
Fig. 3B is a diagram illustrating an example (2) of resource exclusion in an embodiment of the present invention;
Fig. 4A is a diagram illustrating an example (3) of resource exclusion in an embodiment of the present invention;
Fig. 4B is a diagram illustrating an example (4) of resource exclusion in an embodiment of the present invention;
Fig. 5 is a diagram for describing a communication sequence in an embodiment of the present invention;
Fig. 6 is a diagram illustrating an example of a functional configuration of a base station apparatus 10 in an embodiment of the present invention;
Fig. 7 is a diagram illustrating an example of a functional configuration of a user equipment 20 in an embodiment of the present invention; and
Fig. 8 is a diagram illustrating an example of a hardware configuration of a base station apparatus 10 or a user equipment 20 in an embodiment of the present invention.

### MODE(S) FOR CARRYING OUT THE INVENTION

Hereinafter, an embodiment of the present invention will be described with reference to the appended drawings. Note that the following is an example, and an embodiment to which the present invention is applied is not limited to the following embodiment.

In an operation of a wireless communication system of an embodiment of the present invention, existing technology is appropriately used. Here, the existing technology is, for example, existing LTE but not limited to existing LTE. Further, the term "LTE" used in this specification shall have a broad meaning including LTE-Advanced and a scheme subsequent to LTE-Advanced (for example, NR) unless otherwise set forth herein.

In an embodiment of the present invention, a duplex scheme may be a time division duplex (TDD) scheme, a frequency division duplex (FDD) scheme, or any other scheme (for example, a flexible duplex or the like).

In the following description, a method of transmitting a signal using a transmission beam may be digital beam forming of transmitting a signal (pre-coded with a pre-coding vector) multiplied by a pre-coding vector or may be analog beam forming for realizing beam forming using a variable phase shifter in a radio frequency (RF) circuit. Similarly, a method of receiving a signal using a reception beam may be digital beam forming of multiplying a received signal by a predetermined weight vector or may be analog beam forming of realizing beam forming using a variable phase shifter in a RF circuit. Hybrid beam forming in which digital beam forming and analog beam forming are combined may be applied. Further, transmitting a signal using a transmission beam may be transmitting a signal through a specific antenna port. Similarly, receiving a signal using a reception beam may be receiving a signal through a particular antenna port. An "antenna port" refers to a logical antenna port or a physical antenna port defined in the 3GPP standard. In addition, a precoding or the beam forming is also referred to as a "pre-coder" or a "spatial domain filter."

A method of forming the transmission beam and the reception beam is not limited to the above method. For example, in the base station apparatus 10 and the user equipment 20 having a plurality of antennas included in the wireless communication system of the embodiment of the present invention, a method of changing an angle of each antenna may be used, a method in which a method using a precoding vector and a method of changing an angle of an antenna are combined may be used, a method of switching and using different antenna panels may be used, a method of using a combination of a plurality of antenna panels may be used, or any other method may be used. Further, for example, a plurality of different transmission beams may be used in a high frequency band. Using a plurality of transmission beams is referred to as a multi-beam operation, and using a single transmission beam is used is referred to as a single beam operation.

Further, in an embodiment of the present invention, when a wireless parameter or the like is configured, it may mean that a predetermined value is "pre-configured" or it may mean that a wireless parameter notified from the base station apparatus 10 or the user equipment 20 is configured.

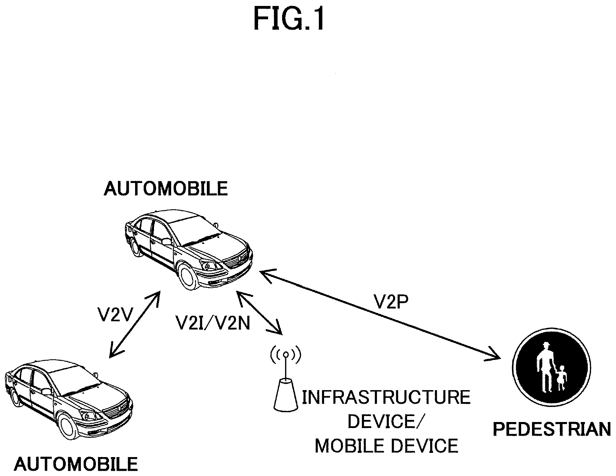

Fig. 1 is a diagram for describing V2X. In 3GPP, implementing vehicle to everything (V2X) or enhanced V2X (eV2X) by extending a D2D function is under review, and specifications thereof is in progress. As illustrated in Fig. 1, V2X is a part of intelligent transport systems (ITS) and is a generic term of vehicle to vehicle (V2V) meaning a communication form performed between automobiles, vehicle to infrastructure (V2I) meaning a communication form performed between an automobile and a road-side unit (RSU) installed on a road side, vehicle to nomadic device (V2N) meaning a communication mode performed between an automobile and a mobile terminal carried by a driver, and vehicle to pedestrian (V2P) meaning a communication mode performed between an automobile and a mobile terminal carried by a pedestrian.

In 3GPP, V2X using cellular communication and inter-terminal communication of LTE or NR is being studied. For V2X of LTE or NR, review not limited to 3GPP specification is expected to be conducted from now. For example, cost reduction by securing of interoperability and implementing of an upper layer, a combining or switching method of a plurality of RATs, regulation response in each country, and data acquisition, delivery, database management, and use method of V2X platform of LTE or NR are expected to be under review.

In an embodiment of the present invention, a form in which the communication device is installed on a vehicle is mainly assumed, but the embodiment of the present invention is not limited to this form. For example, the communication device may be a terminal carried by a person, the communication device may be a device installed in a drone or an aircraft, and the communication device may be a base station, an RSU, a relay station (relay node), a user equipment having a scheduling capability, or the like.

Note that sidelink (SL) may be distinguished from uplink (UL) or downlink (DL) on the basis of one of the following 1) to 4) or a combination thereof. Further, SL may have any other name.
1) A resource arrangement in a time domain
2) A resource arrangement in a frequency domain
3) A synchronization signal to be referred to (including a sidelink synchronization signal (SLSS))
4) a reference signal used for path loss measurement for transmission power control

Further, for orthogonal frequency division multiplexing (OFDM) of SL or UL, any one of cyclic-prefix OFDM (CP-OFDM), discrete Fourier transform-spread-OFDM (DFT-S-OFDM), non-transform pre-coded OFDM, and transform pre-coded OFDM may be applied.

In SL of LTE, Mode 3 and Mode 4 are specified for SL resource allocation to the user equipment 20. In Mode 3, transmission resources are dynamically allocated in accordance with downlink control information (DCI) transmitted from the base station apparatus 10 to the user equipment 20. In Mode 3, semi persistent scheduling (SPS) can be performed as well. In Mode 4, the user equipment 20 autonomously selects transmission resources from a resource pool.

An operation of the user equipment 20 in an embodiment of the present invention may be applied to transmission and reception of SL or may be applied to transmission and reception of DL or UL. In an embodiment of the present invention, "RAT" may be replaced with a cell, a cell group, a carrier component, a bandwidth part (BWP), a resource pool, a resource, or the like. Alternatively, "RAT" may be replaced with any other wireless system such as a wireless Local Area Network (LAN).

A communication scheme in which SL of LTE and SL of NR coexist is under review. In a scheme in which a means cooperating between RATs is not installed, for example, a use case in which independent communication chips are installed in LTE and NR, respectively, is assumed. Further, for example, a scheme in which a means cooperating between RATs is installed, and restrictions of half duplex communication are assumed is under review. Further, a scheme in which time division multiplexing or frequency division multiplexing is applied to SL of LTE and SL of NR is under review.

Here, in a case in which the scheduler not cooperate between RATs, when SL resources in respective RATs overlap in the time domain and/or the frequency domain, and transmission or reception is performed with one resource, a restriction in that transmission or reception is unable to be performed with some or all of the other resources occurs.

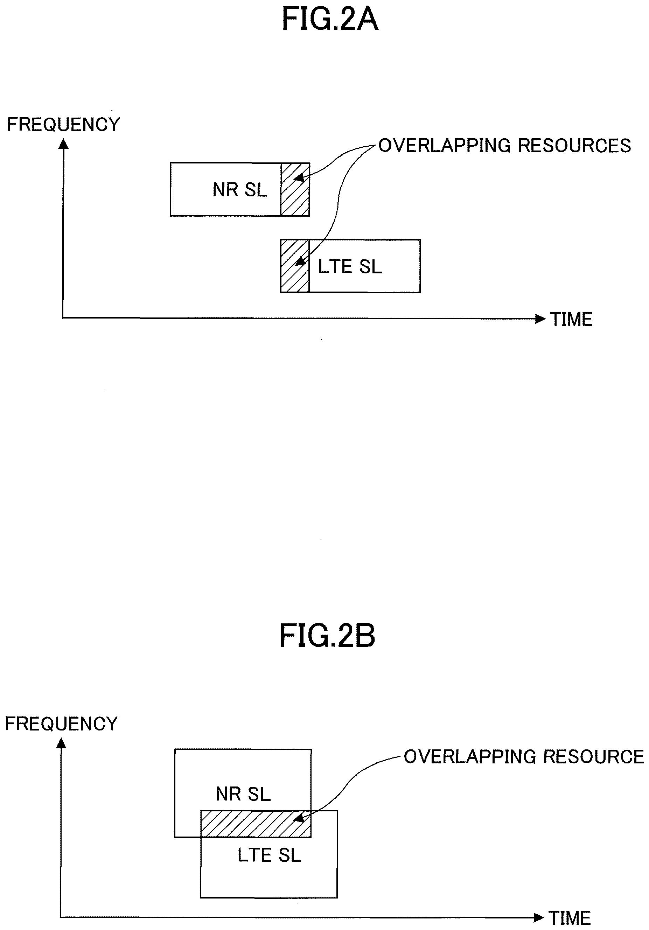

Fig. 2A is a diagram illustrating an example (1) of resource allocation in an embodiment of the present invention. For example, when an SL resource of NR and an SL resource of LTE overlap in the time domain as illustrated in Fig. 2, only either transmission or reception can be executed in the resources overlapping in the time domain. Here, the resources overlapping in the time domain are arranged in the same band or a neighboring band in the frequency domain.

Fig. 2B is a diagram illustrating an example (2) of resource allocation in an embodiment of the present invention. For example, when an SL resource of NR and an SL resource of LTE overlap in the time domain and the frequency domain as illustrated in Fig. 2, simultaneous transmission is unable to be executed in the resources overlapping in the time domain and the frequency domain. For example, spatial multiplexing is necessary to enable the user equipment 20 to execute simultaneous transmission.

In this regard, when the SL resource of NR and the SL resource of LTE overlap in the time domain or the frequency domain, a priority order is configured between RATs or resources. The priority order may be specified in advance in the specifications or may be configured in accordance with a control signal of LTE and/or NR. Examples of the control signal include a physical broadcast channel (PBCH), a physical sidelink broadcast channel (PSBCH), radio resource control (RRC) signaling, media access control (MAC) signaling, downlink control information (DCI), and sidelink control information (SCI). Alternatively, the user equipment 20 that is a transmitting terminal may determine the priority order.

In the case in which the priority order between the RATs or the resources is specified in the specifications, a specific RAT may be fixedly given a priority. For example, LTE may be fixedly given a priority, or NR may be fixedly given a priority.

Further, when the priority order between the RATs or the resources is specified in the specifications, a RAT or a resource which is previously allocated or scheduled in the time domain may be given a priority. Here, the allocation refers to allocation of a resource pool such as Mode 4, and the scheduling refers to scheduling of transmission resources such as Mode 3.

Further, when the priority order between the RATs or the resources is specified in the specifications, a RAT supporting hybrid automatic repeat request acknowledgment (HARQ-ACK) may be given a priority. For example, NR supporting HARQ-ACK in SL may be given a priority.

In the case in which the priority order between the RATs or the resources is configured by the base station apparatus 10 or the user equipment 20 having a scheduling function, it may be configured by a base station apparatus 10 (for example, an eNB, a gNB, or the like) differing depending on each RAT or the user equipment 20 having the scheduling function.

Further, when the priority order between the RATs or the resources is configured in the base station apparatus 10 or the user equipment 20 having the scheduling function, the priority order may be configured for each resource in the same RAT as in prose per-packet priority (PPPP).

Further, when the priority order between the RATs or the resources is configured by the base station apparatus 10 or the user equipment 20 having the scheduling function, the user equipment 20 may report the priority order configured in a resource of a certain RAT to the base station apparatus 10 performing resource allocation or scheduling of other RATs or the user equipment 20 having the scheduling function. The user equipment 20 may report information indicating a time or frequency position of the resource in addition to the priority order of the resource or may report information indicating a time or frequency position of the resource instead of the priority order of the resource. The report may be transmitted through the SCI, the UCI, the MAC signaling, or the RRC signaling.

Further, when the priority order between the RATs or the resources is configured by the base station apparatus 10 or the user equipment 20 having the scheduling function, the base station apparatus 10 or the user equipment 20 having the scheduling function may notify of a control signal of increasing or decreasing the priority order of the resource when the report of the priority order of the resource is received from the user equipment 20. The control signal of increasing or decreasing the priority order of the resource may include an absolute value indicating the priority order or a difference in a variation of the priority order. Further, when the base station apparatus 10 or the user equipment 20 having the scheduling function receives the report of the priority order of the resource from the user equipment 20, resource allocation or scheduling may be performed in addition to the control signal of increasing or decreasing the priority order of the resource, or resource allocation or scheduling may be performed instead of the control signal of increasing or decreasing the priority order of the resource.

In the case in which the priority order between the RATs or the resources is configured by the user equipment 20, the user equipment 20 may notify the user equipment 20 and/or the base station apparatus 10 on the SL reception side of the determined priority order. The notification may be transmitted through the SCI, the UCI, the MAC signaling, or the RRC signaling.

The base station apparatus 10 may perform preemption on a specific RAT or resource. In the preempted resource, a high priority order may be configured, or the highest priority order may be configured. The preemption may be notified of, for example, through the PBCH, the PSBCH, the RRC signaling, the MAC signaling, the DCI, or the SCI.

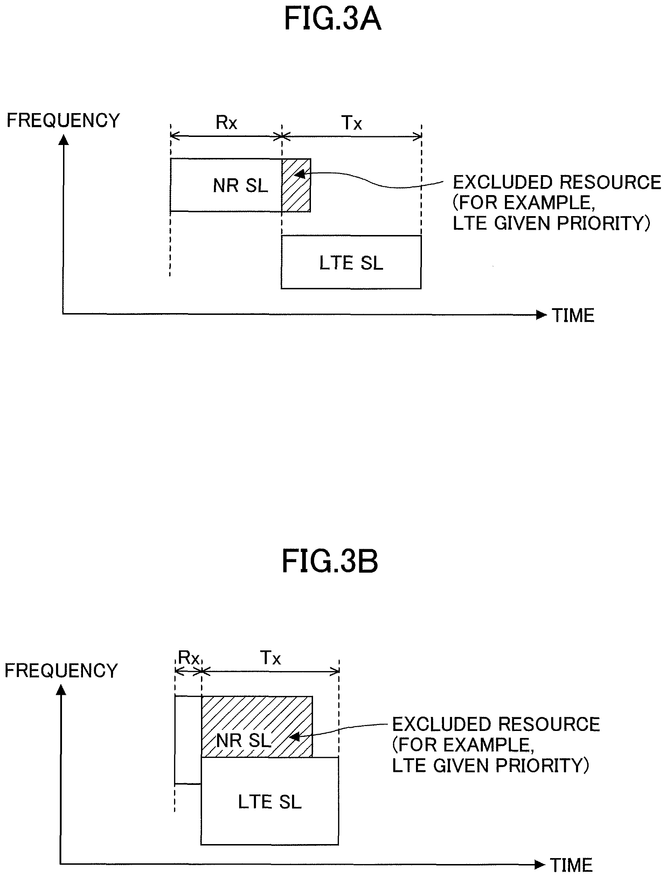

Figs. 3A and 3B show examples (1) and (2) of resource exclusion in an embodiment of the present invention. In a case in which a transmission/reception mode differs depending on a RAT or a resource, for example, when reception is performed in NR, and transmission is performed in LTE, some of resources including a part overlapping in the time domain in a RAT or resource with a low priority order may be excluded from a transmission resource or a reception resource. Figs. 3A and 3B illustrate examples in which LTE is given a priority over NR. A "part (some)" of resources in the time domain to be excluded may be determined with one or more symbols, slots, mini slots, subframes, radio frames, subchannels, or other time domain measures. Further, when a ratio of an overlapping part in the resource is equal to or greater than a predetermined value, all of the resources may be excluded. Further, transmission (Tx) may be performed in NR-SL, and reception (Rx) may be performed in LTE-SL. Further, a positional relation between LTE-SL (LTE Sidelink) and NR-SL (NR Sidelink) in the time domain and the frequency domain has no particular order. For example, unlike the examples illustrated in Fig. 3A and Fig. 3B, LTE-SL may be first, and NR-SL may be later, or in the frequency domain, LTE-SL may be higher, and NR-SL may be low.

As illustrated in Fig. 3A, when the resources of the Rx of NR-SL and the Tx of LTE-SL overlap in the time domain, and LTE is given a priority, the Tx of LTE-SL may be given a priority, and some resources of the Rx of NR-SL including a part overlapping in the time domain may be excluded from a reception target.

As illustrated in Fig. 3B, when the resources of the Rx of NR-SL and the Tx of LTE-SL overlap in the time domain and the frequency domain, and LTE is given a priority, the Tx of LTE-SL may be given a priority, and some resources of the Rx of NR-SL including a part overlapping in the time domain may be excluded from a reception target.

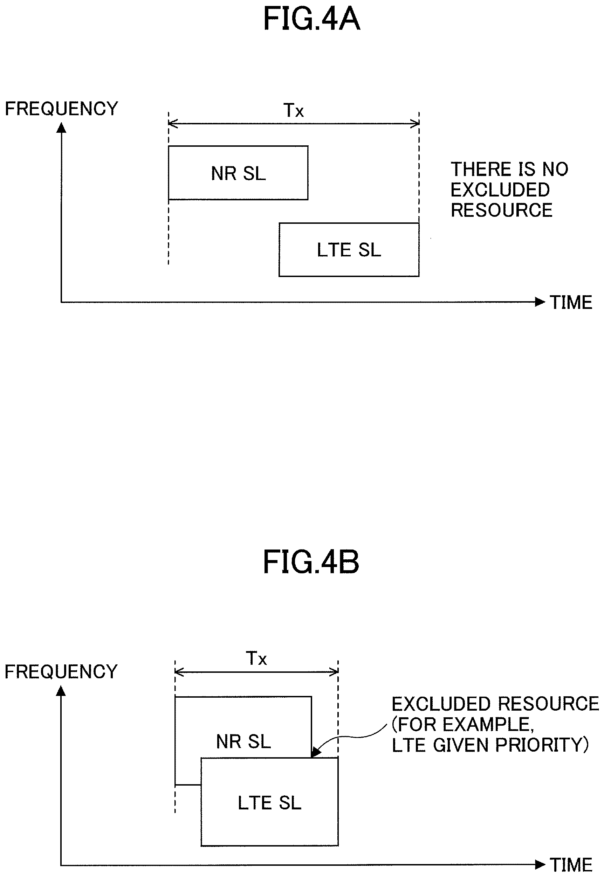

Figs. 4A and 4B show examples (3) and (4) of resource exclusion in an embodiment of the present invention. In a case in which transmission is performed in common in a plurality of RATs or resources, a part overlapping in both the frequency domain and the time domain may be excluded from the transmission resource. The example in which LTE is given a priority over NR is illustrated in Figs. 4A and 4B. A "part (some)" of resources in the time domain and the frequency domain to be excluded is one or more subcarriers, resource elements (REs), resource blocks (RBs), symbols, slots, mini slots, subframes, radio frames, subchannels, or other time domain and/or frequency domain measures. Further, when a ratio of an overlap part in the resources is equal to or greater than a predetermined value, all of the resources may be excluded. Further, transmission (Tx) may be performed in NR-SL, and reception (Rx) may be performed in LTE-SL. Further, a positional relation between LTE-SL and NR-SL in the time domain and the frequency domain has no particular order. For example, unlike the examples illustrated in Fig. 4A and Fig. 4B, LTE-SL may be first, and NR-SL may be later, or in the frequency domain, LTE-SL may be higher, and NR-SL may be low.

As illustrated in Fig. 4A, if Tx of NR-SL and Tx of LTE-SL overlap in the time domain but do not overlap in the frequency domain, the resource may not be excluded.

As illustrated in Fig. 4B, when the resources of the Rx of NR-SL and the Tx of LTE-SL overlap in the time domain and the frequency domain, and LTE is given a priority, the Tx of LTE-SL may be given a priority, and some resources of the Rx of NR-SL including a part overlapping in the time domain and the frequency domain may be excluded from a reception target.

In a case in which some resources are excluded, the user equipment 20 may perform rate matching or puncturing with the remaining resources. The rate matching is executed by, for example, selection of a modulation coding scheme (MCS) or a transport block size (TBS).

The user equipment 20 may detect the overlapping of the resource on the basis of resource allocation or scheduling information by the control signal or may perform sensing to detect it.

In a case in which the resource is a resource pool, the user equipment 20 excludes the overlapping part from the resource pool and performs resource selection.

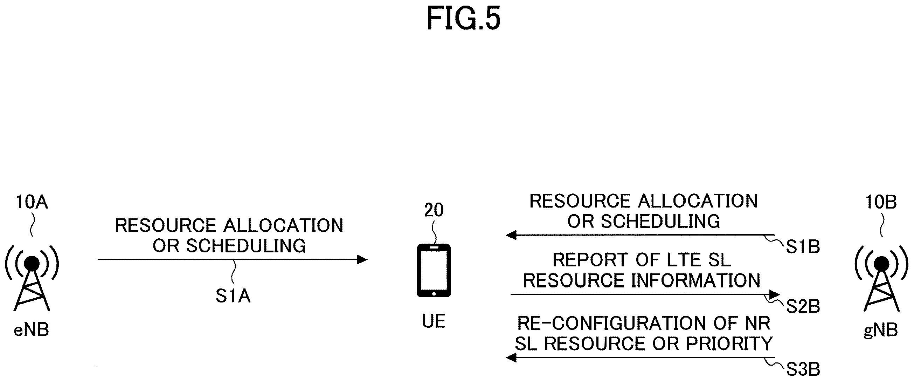

Fig. 5 is a diagram for describing a communication sequence in an embodiment of the present invention. The user equipment 20 may report information related to an overlapping transmission resource or an overlapping reception resource to the base station apparatus 10, the user equipment 20 having the scheduling function, the user equipment 20 that transmits SL, or the user equipment 20 that receives SL through the SCI, the UCI, the MAC signaling, or the RRC signaling.

The communication sequence illustrated in Fig. 5 illustrates an example of reporting information related to the LTE-SL resource to the gNB. In step S1A, the base station apparatus 10A which is an eNB performs LTE-SL resource allocation or scheduling to the user equipment 20. In step S1B, the base station apparatus 10 which is a gNB performs NR-SL resource allocation or scheduling to user equipment 20. Either step S1A or step S1B may be executed first. Further, either or both of S1A and S1B may be omitted. For example, instead of S1A and/or S1B, the user equipment 20 may detect the overlapping by sensing.

When the user equipment 20 detects that the resource allocation or scheduling in step S1A overlap the resource allocation or scheduling in step S1B, in step S2B, the user equipment 20 transmits a report of LTE-SL resource information to the base station apparatus 10B. The LTE-SL resource information may include information related to the overlapping resource (for example, information indicating the time and frequency domain of the overlapping resources and/or the overlapping part, the priority order, or the like).

The overlapping resource and the overlapping part may be indicated by any one or more indexes indicating the time domain and/or the frequency domain of the subcarrier, the RE, the RB, the symbol, the slot, the mini slot, the subframe, the radio frame, the subchannel, or the like. For example, a starting position and an ending position or a length of the overlapping part may be indicated by the above indexes. The information related to the overlapping resource reported from the user equipment 20 may include an index indicating the overlapping resource.

Instead of the overlapping part, an overlapping rate may be reported from the user equipment 20. The overlapping rate is a ratio of the overlapping part to the allocated resource. Information related to the priority order of the RAT other than the base station apparatus 10 receiving the report may be reported instead of or in addition to the overlapping part. An absolute value indicating the priority order may be reported, or a relative value between the RATs indicating the priority order may be reported. Further, instead of or in addition to the overlapping part, information indicating a position of the resource allocated or scheduled by the RAT other than the base station apparatus 10 receiving the report from the user equipment 20 in the time domain and/or frequency domain may be reported. For example, the user equipment 20 may report a part or all of the LTE-SL resource information to the gNB.

In step S3B, the base station apparatus 10 or the user equipment 20 having the scheduling function may exclude some or all of the resources overlapping in the frequency domain and/or the time domain reported from the user equipment 20 and perform resource initial allocation or initial scheduling, or resource re-allocation or rescheduling. Further, the base station apparatus 10 or the user equipment 20 having the scheduling function may transmit a control signal for changing the priority order of the overlapping resources reported from the user equipment 20.

In an embodiment of the present invention, the "priority order" may be replaced with a "request delay" or a "request reliability". In an embodiment of the present invention, the configuration of the priority order for the RAT or the resource, exclusion of some or all of overlapping resources, and the report of the information related to the overlapping resource may be executed in combination or may be executed individually.

According to the embodiment described above, when the resources allocated to the sidelinks of LTE and NR overlap, the user equipment 20 can appropriately determine the resources to be used for transmission and reception, resolve the overlapping of the resources, and executes the sidelink communication. Further, the user equipment 20 reports the information related to the overlapping resources allocated to the sidelinks of the LTE and the NR to the base station apparatus 10, and thus the base station apparatus 10 can execute the sidelink resource allocation in which resources being used by other RATs are considered more efficiently.

In other words, it is possible to determine the resource used by the user equipment in the D2D direct communication between different RATs.

### (Device configuration)

Next, a functional configuration example of each of the base station apparatus 10 and the user equipment 20 that execute the processes and the operation described so far will be described. Each of the base station apparatus 10 and the user equipment 20 has the function of implementing the embodiment. Here, each of the base station apparatus 10 and the user equipment 20 may have only some of the functions in the embodiment.

### <Base station apparatus 10>

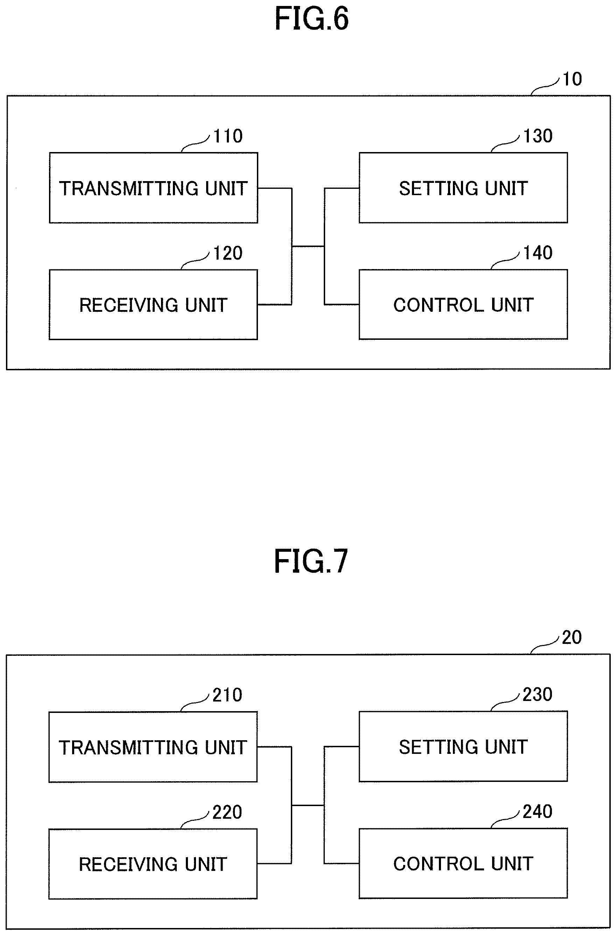

Fig. 6 is a diagram illustrating an example of a functional configuration of the base station apparatus 10. As illustrated in Fig. 6, the base station apparatus 10 has a transmitting unit 110, a receiving unit 120, a setting unit 130, and a control unit 140. The functional configuration illustrated in Fig. 6 is only an example. As long as the operation according to the embodiment of the present invention can be executed, the function classification and the name of the function unit are not consequential.

The transmitting unit 110 has a function of generating a signal to be transmitted to the user equipment 20 and transmitting the signal wirelessly. The receiving unit 120 has a function of receiving various types of signals transmitted from the user equipment 20 and acquiring, for example, information of a higher layer from the received signals. The transmitting unit 110 has a function of transmitting the NR-PSS, the NR-SSS, the NR-PBCH, the DL/UL control signal, the DL reference signal, or the like to the user equipment 20.

The setting unit 130 stores pre-configured configuration information and various configuration information to be transmitted to the user equipment 20 in the storage device and reads the configuration information from the storage device if necessary. Examples of the content of the configuration information include information related to the reference signal and information related to a configuration of the D2D communication. For example, content of the configuration information is information related to the resource configuration of the D2D communication.

As described in the embodiment, the control unit 140 performs processing related to a resource configuration used for the user equipment 20 to perform the D2D communication. A functional unit related to signal transmission in the control unit 140 may be included in the transmitting unit 110, and a functional unit related to signal reception in the control unit 140 may be included in the receiving unit 120.

### <User equipment 20>

Fig. 7 is a diagram illustrating an example of a functional configuration of the user equipment 20. As illustrated in Fig. 7, the user equipment 20 has a transmitting unit 210, a receiving unit 220, a setting unit 230, and a control unit 240. The functional configuration illustrated in Fig. 7 is only an example. As long as the operation according to the embodiment of the present invention can be executed, the function classification and the name of the function unit are not consequential.

The transmitting unit 210 generates a transmission signal from transmission data and transmits the transmission signal wirelessly. The receiving unit 220 wirelessly receives various types of signals, and acquires a signal of a higher layer from a received signal of a physical layer. The receiving unit 220 also has a function of receiving the NR-PSS, the NR-SSS, the NR-PBCH, the DL/UL/SL control signal, the reference signal, or the like transmitted from the base station apparatus 10. Further, for example, the transmitting unit 210 may transmit a physical sidelink control channel (PSCCH), a physical sidelink shared channel (PSSCH), a physical sidelink discovery channel (PSDCH), a physical sidelink broadcast channel (PSBCH), and the like to other user equipments 20 as the D2D communication, and the receiving unit 220 receives the PSCCH, the PSSCH, the PSDCH, the PSBCH, and the like from other user equipments 20.

The setting unit 230 stores various types of configuration information received from the base station apparatus 10 or the user equipment 20 through the receiving unit 220 in the storage device and reads the configuration information from the storage device if necessary. The setting unit 230 also stores pre-configured configuration information. Examples of the content of the configuration information include information related to the reference signal and information related to the setting of the D2D communication. For example, content of the configuration information is information related to the configuration of the D2D communication.

The control unit 240 controls the D2D communication with other user equipments 20 as described in the embodiment. Further, the control unit 240 detects whether or not the resources configured in the D2D communication overlap. Further, when it is detected that the resources configured in the D2D communication overlap, the control unit 240 reports it to the base station apparatus 10 or the like through the transmitting unit 210. Further, the control unit 240 executes measurement on the basis of the received reference signal. A functional unit related to signal transmission in the control unit 240 may be included in the transmitting unit 210, and a functional unit related to signal reception in the control unit 240 may be included in the receiving unit 220.

### (Hardware configuration)

In the functional configuration diagrams (Figs. 6 and 7) used for the description of the embodiment of the present invention, the blocks of the functional units are illustrated. The functional blocks (configuring units) are implemented by an arbitrary combination of hardware and/or software. A device of implementing each functional block is not particularly limited. In other words, each functional block may be implemented by one device in which a plurality of elements are physically and/or logically combined or may be implemented by a plurality of devices, that is, two or more devices which are physically and/or logically separated and are directly and/or indirectly connected (for example, a wired and/or wireless manner).

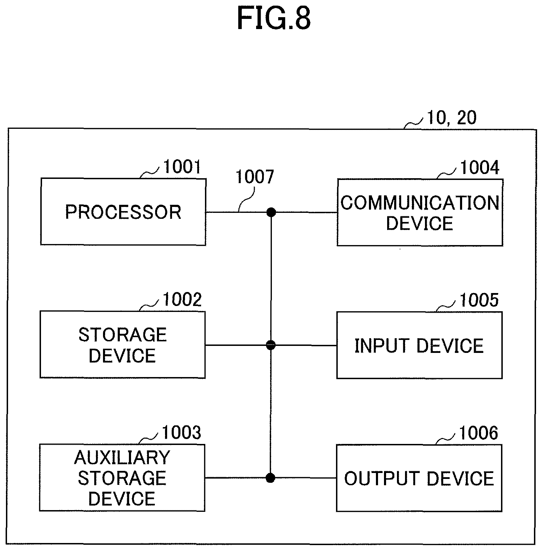

Further, for example, both the base station apparatus 10 and the user equipment 20 in one embodiment of the present invention may function as a computer that performs the process according to the present invention. Fig. 8 is a diagram illustrating an example of a hardware configuration of a wireless communication device which is the base station apparatus 10 or the user equipment 20 according to the embodiment of the present invention. Each of the base station apparatus 10 and the user equipment 20 may be physically configured as a computer device including a processor 1001, a storage device 1002, an auxiliary storage device 1003, a communication device 1004, an input device 1005, an output device 1006, a bus 1007, and the like.

In the following description, the term "device" can be read as a circuit, device, unit, or the like. The hardware configuration of each of the base station apparatus 10 and the user equipment 20 may be configured to include one or more devices indicated by 1001 to 1006 illustrated in the drawing or may be configured without including some devices.

Each function in each of the base station apparatus 10 and the user equipment 20 is implemented such that predetermined software (program) is read on hardware such as the processor 1001 and the storage device 1002, and the processor 1001 performs an operation and controls communication by the communication device 1004 and reading and/or writing of data in the storage device 1002 and the auxiliary storage device 1003.

For example, the processor 1001 operates an operating system and controls the entire computer. The processor 1001 may be configured with a central processing unit (CPU) including an interface with a peripheral device, a control device, an operation device, a register, and the like.

Further, the processor 1001 reads a program (program code), a software module, or data from the auxiliary storage device 1003 and/or the communication device 1004 out to the storage device 1002, and executes various types of processes according to them. A program causing a computer to execute at least some of the operations described in the above embodiment is used as the program. For example, the transmitting unit 110, the receiving unit 120, the setting unit 130, and the control unit 140 of the base station apparatus 10 illustrated in Fig. 6 may be implemented by a control program which is stored in the storage device 1002 and operates on the processor 1001. Further, for example, the transmitting unit 210, the receiving unit 220, the setting unit 230, and the control unit 240 of the user equipment 20 illustrated in Fig. 7 may be implemented by a control program which is stored in the storage device 1002 and operates on the processor 1001. Various types of processes have been described as being performed by one processor 1001 but may be performed simultaneously or sequentially by two or more processors 1001. The processor 1001 may be implemented by one or more chips. The program may be transmitted from a network via an electric communication line.

The storage device 1002 is a computer readable recording medium and configured with at least one of a read only memory (ROM), an erasable programmable ROM (EPROM), an electrically erasable programmable ROM (EEPROM), a random access memory (RAM), and the like. The storage device 1002 is also referred to as a "register," a "cache," a "main memory," or the like. The storage device 1002 can store programs (program codes), software modules, or the like which are executable for carrying out the radio communication method according to an embodiment of the present embodiment.

The auxiliary storage device 1003 is a computer-readable recording medium and may be configured with, for example, at least one of an optical disk such as a compact disc ROM (CD-ROM), a hard disk drive, a flexible disk, a magneto-optical disk (for example, a compact disk, a digital versatile disk, or a Blu-ray (registered trademark) disc, a smart card, a flash memory (for example, a card, a stick, or a key drive), a floppy (registered trademark) disk, a magnetic strip, and the like. The auxiliary storage device 1003 is also referred to as an "auxiliary storage device." The storage medium may be, for example, a database, a server, or any other appropriate medium including the storage device 1002 and/or the auxiliary storage device 1003.

The communication device 1004 is hardware (a transceiving device) for performing communication between computers via a wired and/or wireless network and is also referred to as a "network device," a "network controller," a "network card," a "communication module," or the like. For example, the transmitting unit 110 and the receiving unit 120 of the base station apparatus 10 may be implemented in the communication device 1004. Further, the transmitting unit 210 and the receiving unit 220 of the user equipment 20 may be implemented in the communication device 1004.

The input device 1005 is an input device that receives an input from the outside (such as a keyboard, a mouse, a microphone, a switch, a button, a sensor, or the like). The output device 1006 is an output device that performs an output to the outside (for example, a display, a speaker, an LED lamp, or the like). The input device 1005 and the output device 1006 may be integratedly configured (for example, a touch panel).

The respective devices such as the processor 1001 and the storage device 1002 are connected via the bus 1007 to communicate information with each other. The bus 1007 may be configured with a single bus or may be configured with different buses between the devices.

Further, each of the base station apparatus 10 and the user equipment 20 may be configured to include hardware such as a microprocessor, a digital signal processor (DSP), an application specific integrated circuit (ASIC), a programmable logic device (PLD), or a field programmable gate array (FPGA) or all or some of the functional blocks may be implemented by hardware. For example, the processor 1001 may be implemented by at least one of these pieces of hardware.

### (Conclusion of embodiment)

As described above, according to an embodiment of the present invention, provided is a user equipment including a receiving unit that receives first information indicating a first resource usable for D2D direct communication and second information indicating a second resource usable for the D2D direct communication, a control unit that determines a resource to be used for the D2D direct communication when the first resource and the second resource overlap, and a communication unit that executes the D2D direct communication using the determined resource.

With the above configuration, when the resources allocated to the sidelinks of LTE and NR overlap, the user equipment 20 can appropriately determine the resources to be used for transmission and reception, resolve the overlapping of the resources, and executes the sidelink communication. In other words, it is possible to determine the resource to be used by the user equipment in the D2D direct communication between different RATs.

When the first resource and the second resource overlap, the control unit may determine the resource to be used for the D2D direct communication on the basis of a priority order configured in a Radio Access Technology (RAT) to which the first resource is allocated and a priority order configured in a RAT to which the second resource is allocated, the resource to be used for the D2D direct communication on the basis of which one of the first resource and the second resource which is first allocated in a time domain, or the resource to be used for the D2D direct communication on the basis of whether or not any one of the RAT to which the first resource is allocated and the RAT to which the second resource is allocated supports a hybrid automatic repeat request (HARQ). According to this configuration, when the resources allocated to the sidelinks of LTE and NR overlap, the user equipment 20 can determine the resources to be used for transmission and reception on the basis of the priority order or the like, solve the overlapping of the resources, and execute the sidelink communication.

When the first resource and the second resource overlap in a time domain, and a transmission/reception mode of a RAT to which the first resource is allocated is different from a transmission/reception of a RAT to which the second resource is allocated, the control unit may exclude some or all of resources overlapping in the time domain from the resource to be used for the D2D direct communication of any one of the first resource and the second resource. With this configuration, when the resources allocated to the sidelinks of LTE and NR overlap, the user equipment 20 can appropriately exclude the resources to be used for transmission and reception, resolve the overlapping of the resources, and executes the sidelink communication.

A transmitting unit that transmits, when the control unit determines a priority order of the first resource and a priority order of the second resource, the determined priority order to a base station apparatus or another user equipment may be further provided. According to this configuration, when the resources allocated to the sidelinks of LTE and NR overlap, the user equipment 20 can determine the resources to be used for transmission and reception on the basis of the priority order or the like, solve the overlapping of the resources, and execute the sidelink communication.

A transmitting unit that transmits, when the first resource and the second resource overlap, information related to the overlapping resources to a base station apparatus or another user equipment may be provided, and the receiving unit may receive information indicating a third resource usable for the D2D direct communication based on the information related to the overlapping resource from the base station apparatus or the other user equipment. With this configuration, the user equipment 20 reports the information related to the overlapping resources allocated to the sidelinks of the LTE and the NR to the base station apparatus 10, and thus the base station apparatus 10 can execute the sidelink resource allocation in which resources being used by other RATs are considered more efficiently.

According to an embodiment of the present invention, provided is a base station apparatus including a transmitting unit that transmits first information indicating a first resource usable for D2D direct communication to a user equipment, a receiving unit that receives information related to a resource in which the first resource overlaps another resource from the user equipment, and a control unit that determines information indicating a second resource usable for the D2D direct communication on the basis of the information related to the overlapping resources.

With the above configuration, when the resources allocated to the sidelinks of LTE and NR overlap, the base station apparatus 10 and the user equipment 20 can appropriately determine the resources to be used for transmission and reception, resolve the overlapping of the resources, and executes the sidelink communication. Further, the user equipment 20 reports the information related to the overlapping resources allocated to the sidelinks of the LTE and the NR to the base station apparatus 10, and thus the base station apparatus 10 can execute the sidelink resource allocation in which resources being used by other RATs are considered more efficiently. In other words, it is possible to determine the resource to be used by the user equipment in the D2D direct communication between different RATs.

### (Supplement of embodiment)

The exemplary embodiment of the present invention has been described above, but the disclosed invention is not limited to the above embodiments, and those skilled in the art would understand various modified examples, revised examples, alternative examples, substitution examples, and the like. In order to facilitate understanding of the invention, specific numerical value examples have been used for description, but the numerical values are merely examples, and certain suitable values may be used unless otherwise stated. The classification of items in the above description is not essential to the present invention. Matters described in two or more items may be combined and used if necessary, and a matter described in one item may be applied to a matter described in another item (unless inconsistent). The boundary between functional units or processing units in a functional block diagram does not necessarily correspond to the boundary between physical parts. Operations of a plurality of functional units may be performed physically by one component, or an operation of one functional unit may be physically performed by a plurality of parts. In the processing procedure described in the embodiments, the order of the processes may be changed as long as there is no inconsistency. For the sake of convenience of processing description, the base station apparatus 10 and the user equipment 20 have been described using the functional block diagrams, but such devices may be implemented by hardware, software, or a combination thereof. Software executed by the processor included in the base station apparatus 10 according to the embodiment of the present invention and software executed by the processor included in the user equipment 20 according to the embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate storage medium.

A notification of information is not limited to the aspect or embodiment described in this specification and may be given by any other method. For example, the notification of information may be given physical layer signaling (for example, downlink control information (DCI), uplink control information (UCI)), higher layer signaling (for example, radio resource control (RRC) signaling, medium access control (MAC) signaling, broadcast information (master information block (MIB), system information block (SIB))), other signals, or a combination thereof. Further, the RRC signaling may be referred to as an "RRC message" and may be, for example, an RRC connection setup message, an RRC connection reconfiguration message, or the like.

Each aspect and embodiment described in this specification is applicable to LTE, LTE-A, SUPER 3G, IMT-Advanced, 4G, 5G, future radio access (FRA), W-CDMA (registered trademark), GSM (registered trademark), CDMA2000, ultra mobile broadband (UMB), IEEE 802.11 (Wi-Fi), IEEE 802.16 (WiMAX), IEEE 802.20, ultra-wideband (UWB), Bluetooth (registered trademark), and systems using any other appropriate systems and/or next generation systems expanded on the basis of the systems.

The processing procedures, the sequences, the flowcharts, and the like of the respective aspects/embodiments described in this specification may be reversed in order unless there is a contradiction. For example, the method described in this specification presents elements of various steps in an exemplary order and is not limited to a presented specific order.

In this specification, a specific action that is supposed to be performed by the base station apparatus 10 may be performed by an upper node in some cases. In the network including one or more network nodes including the base station apparatus 10, various operations performed for communication with the user equipment 20 can be obviously performed by the base station and/or any network node (for example, an MME, an S-GW, or the like is considered, but it is not limited thereto) other than the base station apparatus 10 and/or the base station apparatus 10. The example in which the number of network nodes excluding the base station apparatus 10 is one has been described above, but a combination of a plurality of other network nodes (for example, an MME and an S-GW) may be provided.

Each aspect/embodiment described in this specification may be used alone, may be used in combination, or may be switched in association with execution.

The user equipment 20 is also referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or other appropriate terms, depending on those having skill in the art.

The base station apparatus 10 is also referred to as a Node B (NB)), an evolved Node B (eNB), a next generation Node B (gNB), a base Station, or other appropriate terms, depending on those having skill in the art.

The term "determining" used in this specification may include a wide variety of actions. For example, "determining" may include, for example, events in which events such as judging, calculating, computing, processing, deriving, investigating, looking up (for example, looking up in a table, a database, or another data structure), or ascertaining are regarded as "determining." Further, "determining" may include, for example, events in which events such as receiving (for example, receiving information), transmitting (for example, transmitting information), input, output, or accessing (for example, accessing data in a memory) are regarded as "determining." Further, "determining" may include, for example, events in which events such as resolving, selecting, choosing, establishing, or comparing are regarded as "determining." In other words, "determining" may include events in which a certain operation is regarded as "determining."

A phrase "on the basis of" used in this specification is not limited to "on the basis of only" unless otherwise stated. In other words, a phrase "on the basis of" means both "on the basis of only" and "on the basis of at least."

"Include," "including," and variations thereof are intended to be comprehensive, similarly to a term "equipped with (comprising)" as long as the terms are used in this specification or claims set forth below. Furthermore, the term "or" used in this specification or claims set forth below is intended not to be an exclusive disjunction.

In the present disclosure, for example, when an article such as "a," "an," or "the" in English is added by a translation, such an article is assumed to include the plural unless it is obviously indicated that such an article does not include the plural.

In an embodiment of the present invention, the transmitting unit 210 or the receiving unit 220 is an example of a communication unit.

Although the present invention has been described above in detail, it is obvious to those having skill in the art that the present invention is not limited to the embodiments described in this specification. The present invention can be carried out as revisions and modifications without departing from the gist and scope of the present invention decided in claims set forth below. Therefore, the description of this specification is intended to be exemplary and does not have any restrictive meaning to the present invention.

### EXPLANATIONS OF LETTERS OR NUMERALS

- 10: BASE STATION APPARATUS
- 110: TRANSMITTING UNIT
- 120: RECEIVING UNIT
- 130: SETTING UNIT
- 140: CONTROL UNIT
- 20: USER EQUIPMENT
- 210: TRANSMITTING UNIT
- 220: RECEIVING UNIT
- 230: SETTING UNIT
- 240: CONTROL UNIT
- 1001: PROCESSOR
- 1002: STORAGE DEVICE
- 1003: AUXILIARY STORAGE DEVICE
- 1004: COMMUNICATION DEVICE
- 1005: INPUT DEVICE
- 1006: OUTPUT DEVICE

## Claims

1. A user equipment, comprising:
a receiving unit that receives first information indicating a first resource usable for D2D direct communication and second information indicating a second resource usable for D2D direct communication;
a control unit that determines a resource to be used for D2D direct communication when the first resource and the second resource overlap; and
a communication unit that executes D2D direct communication using the determined resource.

2. The user equipment according to claim 1, wherein, when the first resource and the second resource overlap, the control unit determines
the resource to be used for the D2D direct communication on the basis of a priority order configured in a Radio Access Technology (RAT) to which the first resource is allocated and a priority order configured in a RAT to which the second resource is allocated,
the resource to be used for the D2D direct communication on the basis of which one of the first resource and the second resource is first allocated in a time domain, or
the resource to be used for the D2D direct communication on the basis of which one of the RAT to which the first resource is allocated and the RAT to which the second resource is allocated supports a hybrid automatic repeat request (HARQ).

3. The user equipment according to claim 1, wherein, when the first resource and the second resource overlap in a time domain, and a transmission/reception mode of a RAT to which the first resource is allocated is different from a transmission/reception of a RAT to which the second resource is allocated, the control unit excludes some or all of resources overlapping in the time domain from the resource to be used for the D2D direct communication of any one of the first resource and the second resource.

4. The user equipment according to claim 1, further comprising, a transmitting unit that transmits, when the control unit determines a priority order of the first resource and a priority order of the second resource, the determined priority order to a base station apparatus or another user equipment.

5. The user equipment according to claim 1, further comprising, a transmitting unit that transmits, when the first resource and the second resource overlap, information related to the overlapping resources to a base station apparatus or another user equipment,
wherein the receiving unit receives information indicating a third resource usable for the D2D direct communication based on the information related to the overlapping resource from the base station apparatus or the other user equipment.

6. A base station apparatus, comprising:
a transmitting unit that transmits first information indicating a first resource usable for D2D direct communication to a user equipment;
a receiving unit that receives information related to a resource in which the first resource overlaps another resource from the user equipment; and
a control unit that determines information indicating a second resource usable for D2D direct communication on the basis of the information related to the overlapping resources.
